# EUROPEAN PATENT SPECIFICATION

(11) **EP 1 626 514 B1**
(45) Date of publication and mention of the grant of the patent: **17.12.2008**
(21) Application number: 03770869.0
(22) Date of filing: 13.11.2003
(51) Int. Cl.: H04J 13/00, H04Q 7/20

(54) **Method for managing uplink scrambling codes in WCDMA**
Verfahren zum Verwalten von Uplink-Verwürfelungscodes in WCDMA
Procédé de gestion des codes de brouillage ascendents en WCDMA

(30) Priority: 20.05.2003 CN 3131547.X
(43) Date of publication of application: 15.02.2006
(73) Proprietor: ZTE Corporation, 518057 Shenzhen, Guangdong (CN)
(72) Inventor: DOU, Jianwu, ZTE Plaza, Keji Road South, Shenzhen, Guangdong 518057 (CN); SHI, Rong, ZTE Plaza, Keji Road South, Shenzhen, Guangdong 518057 (CN); KE, Yazhu, ZTE Plaza, Keji Road South, Shenzhen, Guangdong 518057 (CN)
(74) Representative: Walcher, Armin
(86) International application number: PCT/CN2003/000965
(87) International publication number: WO 2004/105280

(56) References cited:
- WO-A-00/70805
- CN-A- 1 354 608
- JP-A- 2002 335 577

## Description

### TECHNICAL FIELD

The present invention relates to WCDMA (Wideband Code Division Multi-Access) mobile communication system, specifically, to the method of managing uplink scrambling codes in a WCDMA system.

### TECHNICAL BACKGROUND

WCDMA mobile communication system takes a working way of code division multiple-access. After forming frames in a physical channel, operations of spreading spectrum and scrambling are necessary. Spectrum spreading is to convert digital symbols into a sequence of chips by using a high-speed digital sequence multiplying digital signals so as to raise the digital symbols rate and increase signal bandwidth, and the digital sequence symbols used for converting data are called as orthogonal channelization codes, the number of chips converted from each symbol is called spreading factor; operation of scrambling is to use a Golden code sequence multiplying spectrum-spread codes to encrypt the signal; In WCDMA, orthogonal channelization codes are used to distinguish physical channels, and downlink scrambling codes are used to distinguish cells in the downlink direction, while uplink scrambling codes are used to distinguish users, and channelization codes are used to distinguish channels in the uplink direction. The technical specification TS 25.213 worked out by 3GPP (3rd Generation Partnership Project) standardization organization provides 2²⁴-1 (equals to 16777216) uplink scrambling codes for system usage but there is no clear description on how to allocate and use these uplink scrambling codes in a real radio communication system, and no patents and technical documentations with related contents have been found up to now.

Due to the fact that, when a network operator is going to construct a WCDMA radio communication network on a given frequency band, generally a plurality of RNCs (Radio Network Controller) are needed to support normal operation of the network, and at a particular time, for a particular UE (User Equipment) the configuration, management and maintenance of the radio resources are subjected to management of one and only one RNC, which is called as SRNC (Serving Radio Network Controller), at this time the uplink scrambling code used by the UE is managed and configured by the SRNC, when the UE roams to a cell managed by another RNC (the RNC is called as DRNC (Drift Radio Network Controller), if there is no radio links any more related to the UE in the cell managed by the original SRNC at a given time period, then the original SRNC will transfer the management of the UE to a new RNC, that is, a relocation process will occur and the original DRNC will become a SRNC. Since there is a process of relocation of different RNCs and the possibility that the cells managed by different RNCs are geographically adjacent, if not to make a plan on the uplink scrambling code, it is quite possible to lead different RNCs to allocate the same scrambling code to different UEs, causing a conflict, so it is needed to make necessary plan on the allocation of uplink scrambling code resources to prevent a same scrambling code from being allocated to different UEs by different RNCs at geographically adjacent cells, that is, to prevent the communication quality from the affect of scrambling code conflict.

WO00/70805 A1 describes a method for co-ordination of uplink scrambling codes between different radio network controllers and the assignment of such codes to radio connections of user equipments in a code division multiple access communication system. WO00/70805 A1 also describes methods for creating a starting vector used to generate said scrambling codes. According to WO00/70805 A1, a unique subset of scrambling codes is dedicated to each radio network controller by assigning an offset vector. Initial starting vectors are composed by concatenating the offset vector and the binary representation of a determining value within the size range of the dedicated code subset. An idle starting vector is selected, e.g., by using a one-dimensional array containing a status bit for each scrambling code and by using the array index as determining value.

### SUMMARY OF THE INVENTION

The objective of the present invention is to provide a method for managing uplink scrambling code resources for different RNCs in a WCDMA system according to planned capacity.

A technical solution for implementing the objective of the invention is summarized as follows:
A method for managing uplink scrambling codes in a WCDMA system, including following steps: allocating specified number of uplink scrambling codes to the channels PRACH and PCPCH first; allocating uplink scrambling codes execept said specified number of uplink scrambling codes to each RNC according to the planned capacity of each RNC; and said each RNC manages said allocated uplink scrambling codes;
wherein said step of management by each RNC further includes: said RNC orders and numbers said allocated uplink scrambling codes; in such a way that the scrambling code resources allocated to the RNC may not be continous when a UE requests an uplink scrambling code or a UE is relocated to said RNC, the RNC allocates an uplink scrambling code to the UE; when Radio links of the UE is released or a UE is relocated to another RNC, the RNC releases the uplink scrambling code occupied by the UE.

Preferably, said step of ordering and arranging by each RNC further includes: said RNC orders and numbers the uplink scrambling codes at a circle clockwise or counter-clockwise according to the order of allocation, forming a queue of uplink scrambling codes; an occupying flag is set to each uplink scrambling code in said scrambling code queue and an initial value is set to the flag; a scrambling code pointer is set to said scrambling code queue and an initial position is set to said scrambling code pointer so as to point to an unoccupied uplink scrambling code in said scrambling code queue.

Preferably, said step of allocating uplink scrambling code by each RNC further includes: a judgment is made to determine whether said scrambling code pointer points to the end of said scrambling code queue, if the answer is "yes", it is failed to allocate uplink scrambling code for said UE, otherwise the uplink scrambling code pointed by said scrambling code pointer will be allocated to said UE, and the corresponding occupying flag is modified; a judgment is made to determine whether there exist any unoccupied uplink scrambling codes in said scrambling code queue, if not, then said scrambling code pointer is set to point to the end of said scrambling code queue, otherwise said scrambling code pointer is set to point to the nearest unoccupied uplink scrambling code.

Preferably, said step of releasing an uplink scrambling code by said each RNC further includes: uplink scrambling code occupied by said UE is released and the corresponding occupying flag is modified; a judgment is made to determine whether said scrambling code pointer points to the end of said scrambling code queue, if the answer is "yes", said scrambling code pointer is set so as to point to said released uplink scrambling code.

Preferably, said step of releasing uplink scrambling codes by said each RNC further includes: when said UE is relocated to another RNC from the original RNC, before releasing the UE occupied uplink scrambling code, the RNC waits for a predetermined time period and then releases the uplink scrambling code occupied by said UE.

Preferably, said RNC planned capacity means the maximum number of users that can be activated inside the RNC at the same time. The number of said uplink scrambling codes allocated to the RNC is lager than one time of the RNC planned capacity.

The present invention provides a method for managing uplink scrambling codes in a WCDMA system, said method has advantages such as easy realization, low computation complexity, small system overhead, easy application in development of real systems and so on. The method for managing uplink scrambling codes set forth by the present invention can prevent conflict caused by the same scrambling code being used by different UEs possibly caused by the UEs when a SRNC makes relocation, especially for the geographically adjacent cells controlled by different RNCs, the problem of uplink scrambling code conflict due to non-planned uplink scrambling code allocation can be solved.

### BRIEF DESCRIPTION OF THE DRAWINGS

Fig.1 is a general flowchart of the method set forth by the invention;
Fig.2 schematically shows the principles of the uplink scrambling code allocation set worth by the invention;
Fig.3 schematically shows the RNC ordering and arranging allocated uplink scrambling codes;
Fig.4 is a flowchart showing releasing uplink scrambling codes inside a RNC;
Fig.5 is a flowchart showing allocating uplink scrambling codes inside a RNC;
Fig.6 is a flowchart showing the original SRNC releasing relocated UE uplink scrambling code;
Fig.7 shows the original state of uplink scrambling code allocation in a

### preferred embodiment;

Fig.8 shows the state after allocation of the uplink scrambling codes in a preferred embodiment; and

Fig. 9 shows the state after releasing the uplink scrambling codes in a preferred embodiment.

### DETAILED DESCRIPTION OF THE INVENTION

Next, a detailed description of the present invention will be given in conjunction with the drawings and embodiments.

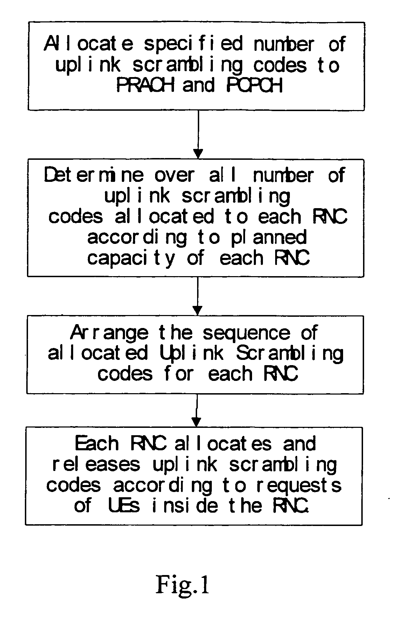

Fig.1 is a general flowchart of the method set forth by the invention. As shown in Fig.1, said method of the invention for managing uplink scrambling codes in a WCDMA system includes following steps: (1) specified number of uplink scrambling codes are allocated to the channels PRACH and PCPCH first; (2) number of uplink scrambling codes allocated to each RNC is determined according to the planned capacity of each RNC; (3) the allocated uplink scrambling code resources are ordered and arranged inside each RNC; (4) each RNC allocates and releases the uplink scrambling codes according to the requests of UEs inside the RNC.

Next, in conjunction with other drawings and embodiments, detailed description of each step will be given respectively.

### 1. Specified number of uplink scrambling codes are allocated to the channels PRACH and PCPCH first

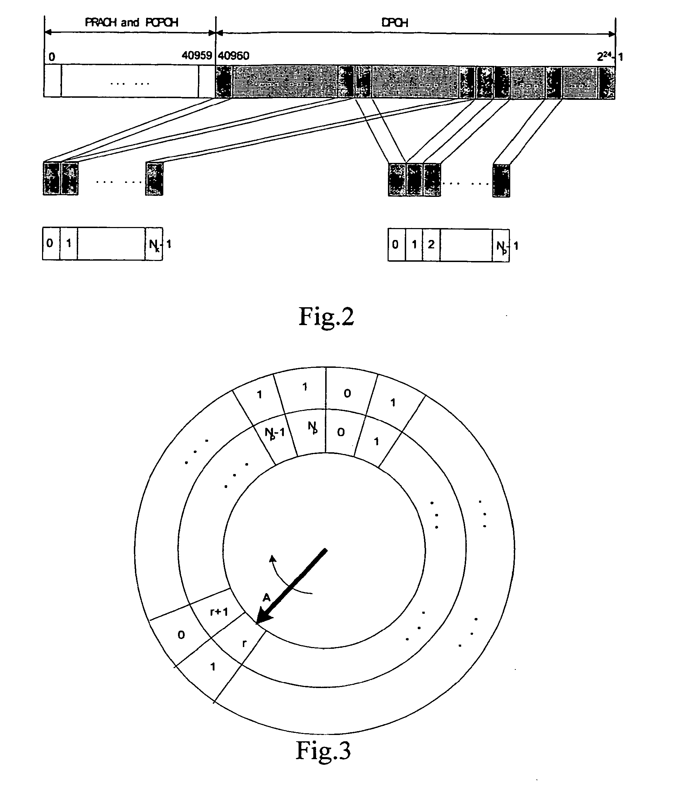

As shown in Fig.2, the uplink scrambling codes numbers 0-40959 are allocated to channels PRACH (Physical Random Access Channel) and PCPCH (Physical Common Packet Channel) and their prefixes, and will not be allocated to DPCH (Dedicated Physical Channel).

### 2. Number of uplink scrambling codes allocated to each RNC is determined according to the planned capacity of each RNC

The RNCs that participate in allocation of uplink scrambling codes are numbered as No.1, No.2, ..., No.k.

The planned capacity of the RNC No.1 is set to be Q1 users;
The planned capacity of the RNC No.2 is set to be Q2 users;
˙˙˙ ˙˙˙
The planned capacity of the RNC No.p is set to be Qₚ users;
˙˙˙ ˙˙˙
The panned capacity of the RNC No.k is set to be Qₖ users;
The planned capacity mentioned above means the maximum number of users that can be activated at the same time.

Considering the fact that, during an initial period of time after SRNC relocation, the UE under a new SRNC will still use the scrambling code in the old SRNC resource, so the over all number of uplink scrambling codes allocated to each RNC will be C (C>1) times of the planned capacity. The numbers are as follows:
The over all number of uplink scrambling codes allocated to the RNC No.1 is N₁=Ceil(Q₁*C);
The over all number of uplink scrambling codes allocated to the RNC No.2 is N₂=Ceil(Q₂*C);
˙˙˙˙˙˙
The over all number of uplink scrambling codes allocated to the RNC No.p is Nₚ=Ceil(Qₚ*C);
˙˙˙˙˙˙
The over all number of uplink scrambling codes allocated to the RNC No.k is Nₖ=Ceil(Qₖ*C);
Above Ceil(.) represents a function of getting an upper-bound integer.

### 3. The allocated uplink scrambling code resources are ordered and arranged inside each RNC

Considering the affect of capacity expanding and other factors, the scrambling code resources allocated to certain RNC may not be continuous, it is necessary to order and arrange allocated scrambling code resources inside the RNC, the method is as follows:

The uplink scrambling codes of the RNC No.p are numbered according to the allocation order, no matter whether the scrambling code number is larger or smaller, as No.1, No.2, ..., and No. Nₚ-1, respectively, here p=1∼k.

As shown in Fig.3, pointer A is the one pointing to the scrambling code number of an allocated uplink scrambling code inside the RNC, Nₚ-1 is the scrambling code number of the last scrambling code obtained after ordering and arranging the allocated scrambling code resources inside the RNC. The number Nₚ is used for a status indication which indicates that the uplink scrambling codes of the RNC have all been occupied. Nₚ uplink scrambling codes allocated by RNC No.p and the status indication are sequentially arranged at a circle clockwise (or counter-clockwise), figures at the inner circle represent scrambling code numbers inside the RNC and the number of the status indication, and the figures at the outer circle are the values assigned to the occupying flags of the scrambling codes and the status indication; the occupying flag value 1 represents that the uplink scrambling code is "allocatable", that is, it is not occupied, and the occupying flag value 0 represents that the uplink scrambling code has been occupied.

Pointer A rotates clockwise (or counter-clockwise), the pointed scrambling code number represents the scrambling code number of the next allocatable, non-occupied scrambling code number. The initial position of pointer A can be at any scrambling code that is not occupied. When pointer A is at the position of Nₚ, it represents that the RNC's uplink scrambling codes have all been occupied.

### 4. Each RNC allocates and releases the uplink scrambling codes according to the requests of UEs inside the RNC.

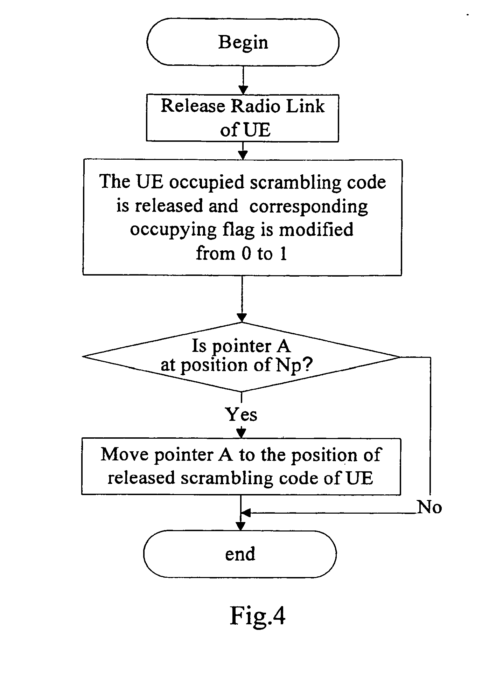

When certain UE's link is taken apart and the uplink scrambling code is needed to be released, as shown in Fig.4, the method for releasing an uplink scrambling code inside the RNC includes following steps:
(1) The UE link is taken apart;
(2) The UE occupied scrambling code is released and the value of corresponding occupying flag is modified from "occupied" to "allocatable";
(3) A judgment is made to determine whether pointer A points to the position of Nₚ, if the answer is "yes", pointer A is set to point to the released scrambling code and then the process ends.
(4) The release process ends.

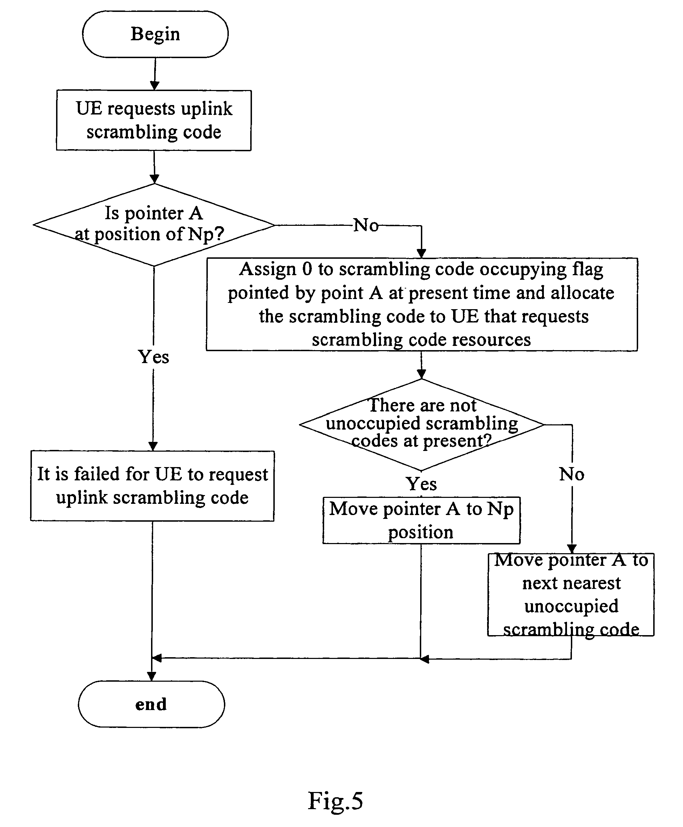

When certain UE requests an uplink scrambling code, as shown in Fig.5, the method for allocating an uplink scrambling code inside the RNC includes following steps:
(1) A judgment is made to determine whether pointer A points to the position of Nₚ, if pointer A points to the position of Nₚ, it is failed for the UE to request an uplink scrambling code and the process ends;
(2) Otherwise the value of the scrambling code occupying flag pointed by pointer A will be modified from "allocatable" to "occupied", and the scrambling code is allocated to the UE that requests scrambling resource;
(3) A judgment is made to sequentially determine whether there exist any unoccupied uplink scrambling codes, if there are not any unoccupied scrambling codes at present, then pointer A is set to point to the position of Nₚ, and the process ends;
(4) Otherwise pointer A is set to point to the next nearest unoccupied uplink scrambling code.

When a UE makes SRNC relocation, the new SRNC reconfigures the UE's uplink scrambling code, and the original SRNC will release the uplink scrambling code occupied by the UE after a time period of T_{srnc-reloaction} during which the UE should complete SRNC relocation.

A flowchart of a UE requesting an uplink scrambling code inside a new SRNC is shown in Fig.5 as described above, here will not be repeated.

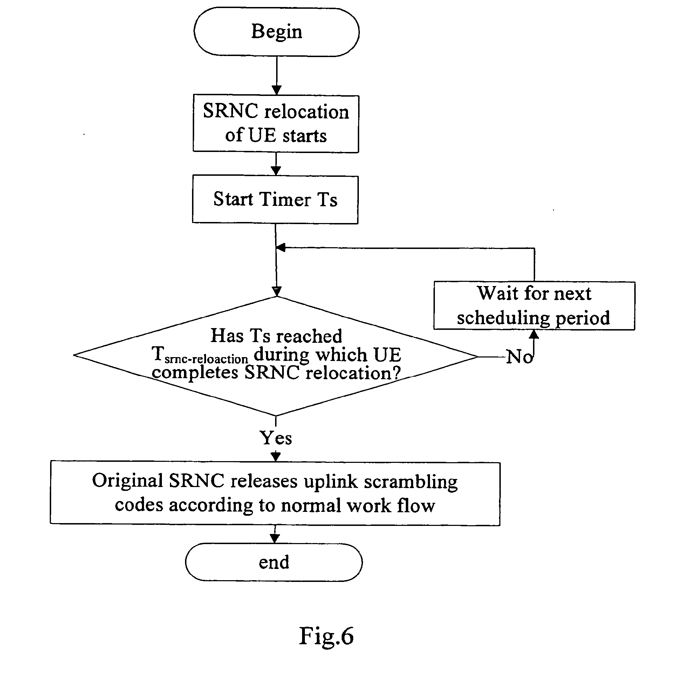

A flowchart of the original SRNC releasing the uplink scrambling code occupied by the relocated UE is shown in Fig.6, including following steps:
(1) The UE begins SRNC relocation;
(2) Timer T_{S} is started;
(3) A judgment is made to determine whether T_{S} has reached the time period of T_{srnc-reloaction} during which the UE should complete SRNC relocation, if not, it will wait till the next dispatch period;
(4) Otherwise, the original SRNC releases the uplink scrambling code occupied by the relocated UE according to the normal flowchart shown in Fig.4.

Next, further explanation will be given in conjunction with a preferred embodiment of the present invention. In the preferred embodiment of the invention, suppose a network operator needs 3 RNCs for establishing a WCDMA radio network, numbered as RNC₁, RNC₂ and RNC₃ respectively.

First step: Specified number of uplink scrambling codes are allocated to the channels PRACH and PCPCH first.

Second step: Over all number of uplink scrambling codes allocated to each RNC is determined according to the planned capacity of each RNC, here RNC₁'s planned capacity Q₁=800,000, RNC₂'s planned capacity Q₂=1,000,000, and RNC₃'s planned capacity Q₃=3,000,000.

Considering the fact that, during an initial period of time after SRNC relocation, the UE under a new SRNC will still use the scrambling code in the old SRNC resource, so the over all number of uplink scrambling codes allocated to each RNC will be C=1.2 times of the planned capacity. The numbers are as follows, respectively:
The over all number of uplink scrambling codes allocated to the RNC₁ is N₁=Ceil(Q₁*C)=960000;
The over all number of uplink scrambling codes allocated to the RNC₂ is N₂=Ceil(Q₂*C)=1200000;
The over all number of uplink scrambling codes allocated to the RNC₃ is N₃=Ceil(Q₃*C)=3600000;
Suppose that the uplink scrambling code resources at present may be allocated to any RNC, the numbers of uplink scrambling codes allocated to RNC₁ are 50001-1010000, the numbers of uplink scrambling codes allocated to RNC₂ are 1100001-2300000, the numbers of uplink scrambling codes allocated to RNC₃ are 2400001-6000000.
Third step: The allocated uplink scrambling code resources are ordered and arranged inside RNCs (taking RNC₁ as an example)
Inside RNC₁, the uplink scrambling code 50001 is numbered as No.0 inside RNC₁;
Inside RNC₁, the uplink scrambling code 50002 is numbered as No.1 inside RNC₁;
˙˙˙ ˙˙˙
Inside RNC₁, the uplink scrambling code 101000 is numbered as No.959999 inside RNC₁;
Inside RNC₁, the uplink scrambling code numbered as No.960000 inside RNC₁ represents that the uplink scrambling resources of RNC₁ have all been occupied.

Fourth step: Each RNC allocates and releases the uplink scrambling codes according to the requests of UEs inside the RNC.

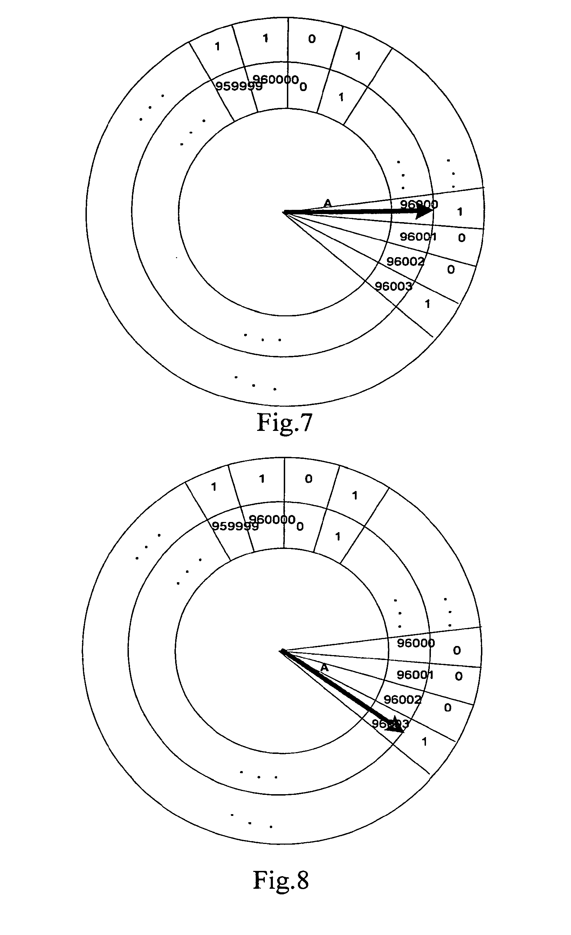

Suppose that at a certain time the original state of the allocation of uplink scrambling codes is as shown in Fig.7, the scrambling codes No.96000 and 96003 are in the "allocatable" state, the scrambling codes No.96001 and No.96002 have been occupied, and pointer A points to No.96000 at present time. When a UE requests an uplink scrambling code, according to the present method, the scrambling code No.96000 is allocated to the UE and the occupying flag of No.96000 is set to 0, while pointer A is moved to point to the scrambling code No.96003, as shown in Fig.8.

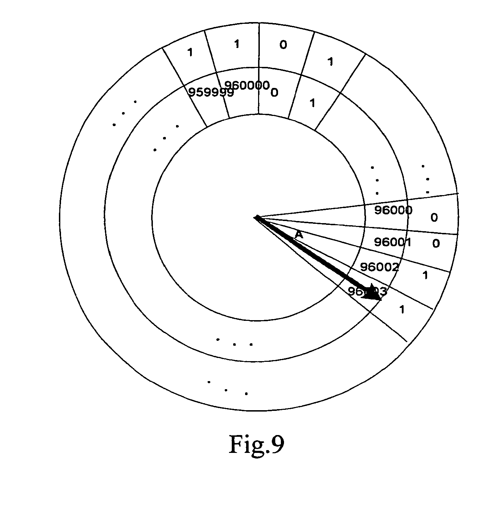

For a mobile communication system, releasing of uplink scrambling codes is random. Suppose that, on the basis of the state shown in Fig.8, the scrambling code No.96002 is released, then the occupying flag of No.96002 is set to the value of 1, as shown in Fig.9.

## Claims

1. A method for managing uplink scrambling codes in a WCDMA system, wherein the method includes following steps:
Allocating specified number of uplink scrambling codes to the channels PRACH and
PCPCH first;
Allocating other uplink scrambling codes except said specified number of uplink scrambling codes to each RNC according to the planned capacity of each RNC; and
Managing said allocated uplink scrambling codes by said each RNC;
wherein said step of managing further includes:
said RNC ordering and numbering said allocated uplink scrambling codes; in such a way that the scrambling code resources allocated to the RNL may not be continuous;
When a UE requests an uplink scrambling code or a UE is relocated to said RNC, the RNC allocating an uplink scrambling code in said allocated uplink scrambling codes to the UE;
When a UE link is taken apart or a UE is relocated to another RNC, the RNC releasing the uplink scrambling code occupied by the UE.

2. The method according to claim 1, wherein said step of ordering and numbering further includes:
Said RNC ordering and numbering the uplink scrambling codes at a circle clockwise or counter-clockwise according to an allocation order of the uplink scrambling codes;
The ordered uplink scrambling codes and a status indication forming a scrambling code queue, wherein the status indication is at the end of the scrambling code queue and indicates that the uplink scrambling codes of said RNC have all been occupied;
Setting an occupying flag to each uplink scrambling code in said scrambling code queue and setting an initial value to the flag;
Setting a scrambling code pointer to said scrambling code queue and setting an initial position to said scrambling code pointer to point to an unoccupied uplink scrambling code in said scrambling code queue.

3. The method according to claim 2, wherein said step of the RNC allocating an uplink scrambling codes to the UE further includes:
Determining whether said scrambling code pointer points to the end of said scrambling code queue, if the answer is "yes", it is failed to allocate an uplink scrambling code to said UE, otherwise the uplink scrambling code pointed by said scrambling code pointer will be allocated to said UE, and the corresponding occupying flag is modified;
Determining whether there exist any unoccupied uplink scrambling codes in said scrambling code queue, if not, said scrambling code pointer is set to point to the end of said scrambling code queue, otherwise said scrambling code pointer is set to point to a nearest unoccupied uplink scrambling code.

4. The method according to claim 2 or 3, wherein said step of the RNC releasing the uplink scrambling code occupied by the UE further includes:
Releasing the uplink scrambling code occupied by said UE and modifying the corresponding occupying flag;
Determining whether said scrambling code pointer points to the end of said scrambling code queue, if the answer is "yes", said scrambling code pointer is set to point to said released uplink scrambling code.

5. The method according to claim 4, wherein said step of the RNC releasing the uplink scrambling code occupied by the UE further includes:
When said UE is relocated to another RNC, before releasing the uplink scrambling code occupied by the UE, the RNC waits for a predetermined time period and then releases the uplink scrambling code occupied by said UE.

6. The method according to claim 1, wherein said planned capacity of the RNC means the maximum number of users that can be activated inside the RNC at the same time.

7. The method according to claim 1, wherein the number of said uplink scrambling codes allocated to the RNC is larger than one time of the planned capacity of the RNC.

## Patentansprüche

1. Verfahren für das Management von Aufwärtsstrecken-Verwürfelungscodes in einem WCDMA-System, wobei das Verfahren die folgenden Schritte umfasst:
Zuweisen einer spezifizierten Anzahl von Aufwärtsstrecken-Verwürfelungscodes zunächst zu den Kanälen PRACH und PCPCH;
Zuweisen anderer Aufwärtsstrecken-Verwürfelungscodes mit Ausnahme der spezifizierten Anzahl von Aufwärtsstrecken-Verwürfelungscodes zu jeder RNC entsprechend der geplanten Kapazität jeder RNC; und
Managen der zugewiesenen Aufwärtsstrecken-Verwürfelungscodes durch jede RNC;
wobei der Managementschritt ferner umfasst:
Ordnen und Nummerieren der zugewiesenen Aufwärtsstrecken-Verwürfelungscodes durch die RNC in der Weise, dass die Verwürfelungscode-Ressourcen, die der RNC zugewiesen sind, nicht kontinuierlich sein müssen;
Zuweisen eines Aufwärtsstrecken-Verwürfelungscodes in den zugewiesenen Aufwärtsstrecken-Verwürfelungscodes zu einem UE durch die RNC, wenn das UE einen Aufwärtsstrecken-Verwürfelungscode anfordert oder wenn ein UE zu der RNC verschoben wird;
Freigeben des von dem UE belegten Aufwärtsstrecken-Verwürfelungscodes durch die RNC, wenn eine UE-Verbindung getrennt wird oder wenn ein UE zu einer weiteren RNC verschoben wird.

2. Verfahren nach Anspruch 1, wobei der Schritt des Ordnens und des Nummerierens ferner umfasst:
Ordnen und Nummerieren der Aufwärtsstrecken-Verwürfelungscodes in einem Kreis im Uhrzeigersinn oder im Gegenuhrzeigersinn entsprechend einer Zuweisungsreihenfolge der Aufwärtsstrecken-Verwürfelungscodes durch die RNC;
Bilden einer Verwürfelungscode-Warteschlange aus den geordneten Aufwärtsstrecken-Verwürfelungscodes und aus einer Statusangabe, wobei die Statusangabe sich am Ende der Verwürfelungscode-Warteschlange befindet und angibt, dass alle Aufwärtsstrecken-Verwürfelungscodes der RNC belegt worden sind;
Setzen eines Belegungs-Flags für jeden Aufwärtsstrecken-Verwürfelungscode in der Verwürfelungscode-Warteschlange und Setzen eines Anfangswertes für das Flag;
Setzen eines Verwürfelungscode-Zeigers auf die Verwürfelungscode-Warteschlange und Setzen einer Anfangsposition für den Verwürfelungscode-Zeiger, damit er auf einen nicht belegten Aufwärtsstrecken-Verwürfelungscode in der Verwürfelungscode-Warteschlange zeigt.

3. Verfahren nach Anspruch 2, wobei der Schritt, in dem die RNC dem UE einen Aufwärtsstrecken-Verwürfelungscode zuweist, ferner umfasst:
Bestimmen, ob der Verwürfelungscode-Zeiger auf das Ende der Verwürfelungscode-Warteschlange zeigt, wobei dann, wenn die Antwort "ja" lautet, die Zuweisung eines Aufwärtsstrecken-Verwürfelungscodes zu dem UE fehlgeht und andernfalls der Aufwärtsstrecken-Verwürfelungscode, auf den der Verwürfelungscode-Zeiger zeigt, dem UE zugewiesen wird und das entsprechende Belegungs-Flag modifiziert wird;
Bestimmen, ob irgendwelche nicht belegten Aufwärtsstrecken-Verwürfelungscodes in der Verwürfelungscode-Warteschlange vorhanden sind, wobei dann, wenn dies nicht der Fall ist, der Verwürfelungscode-Zeiger so gesetzt wird, dass er auf das Ende der Verwürfelungscode-Warteschlange zeigt, und andernfalls der Verwürfelungscode-Zeiger so gesetzt wird, dass er auf den nächsten nicht belegten Aufwärtsstrecken-Verwürfelungscode zeigt.

4. Verfahren nach Anspruch 2 oder 3, wobei der Schritt, in dem die RNC den durch das UE belegten Aufwärtsstrecken-Verwürfelungscode freigibt, ferner umfasst:
Freigeben des durch das UE belegten Aufwärtsstrecken-Verwürfelungscodes und Modifizieren des entsprechenden Belegungs-Flags;
Bestimmen, ob der Verwürfelungscode-Zeiger auf das Ende der Verwürfelungscode-Warteschlange zeigt, wobei dann, wenn die Antwort "ja" lautet, der Verwürfelungscode-Zeiger so gesetzt wird, dass er auf den freigegebenen Aufwärtsstrecken-Verwürfelungscode zeigt.

5. Verfahren nach Anspruch 4, wobei der Schritt, in dem die RNC den durch das UE belegten Aufwärtsstrecken-Verwürfelungscode freigibt, ferner umfasst:
wenn das UE zu einer weiteren RNC verschoben wird, bevor der durch das UE belegte Aufwärtsstrecken-Verwürfelungscode freigegeben wird, Veranlassen, dass die RNC für eine vorgegebene Zeitdauer wartet und dann den durch das UE belegten Aufwärtsstrecken-Verwürfelungscode freigibt.

6. Verfahren nach Anspruch 1, wobei die geplante Kapazität der RNC die Bedeutung der maximalen Anzahl von Anwendern hat, die innerhalb der RNC gleichzeitig aktiviert werden können.

7. Verfahren nach Anspruch 1, wobei die Anzahl der Aufwärtsstrecken-Verwürfelungscodes, die der RNC zugewiesen sind, größer ist als die einfache geplante Kapazität der RNC.

## Revendications

1. Procédé de gestion des codes de brouillage ascendants dans un système WCDMA, dans lequel le procédé comprend les étapes suivantes :
allouer un nombre spécifié de codes de brouillage ascendants aux canaux PRACH et PCPCH en premier ;
allouer d'autres codes de brouillage ascendants à l'exception dudit nombre spécifié de codes de brouillage ascendants à chaque RNC en fonction de la capacité planifiée de chaque RNC ; et
gérer lesdits codes de brouillage ascendants alloués par ledit chaque RNC ;
dans lequel ladite étape de gestion comprend en outre les étapes suivantes :
ledit RNC ordonne et numérote lesdits codes de brouillage ascendants alloués de manière à ce que les ressources de codes de brouillage allouées au RNC ne puissent pas être continues ;
lorsqu'un UE demande un code de brouillage ascendant ou un UE est relocalisé sur ledit RNC, le RNC alloue un code de brouillage ascendant parmi lesdits codes de brouillage ascendants alloués à l'UE ;
lorsqu'une liaison d'UE est mise à l'écart ou un UE est relocalisé sur un autre RNC, le RNC libère le code de brouillage ascendant occupé par l'UE.

2. Procédé selon la revendication 1, dans lequel ladite étape consistant à ordonner et numéroter comprend en outre les étapes suivantes :
ledit RNC ordonne et numérote les codes de brouillage ascendants sur un cercle dans le sens des aiguilles d'une montre ou dans le sens inverse des aiguilles d'une montre selon un ordre d'allocation des codes de brouillage ascendants ;
les codes de brouillage ascendants ordonnés et une indication de statut forment une file d'attente de codes de brouillage, dans lequel l'indication de statut est à la fin de la file d'attente de codes de brouillage et indique que les codes de brouillage ascendants dudit RNC ont tous étés occupés ;
régler un drapeau d'occupation sur chaque code de brouillage ascendant dans ladite file d'attente de codes de brouillage et régler une valeur initiale sur le drapeau ;
régler un pointeur de code de brouillage sur ladite file d'attente de codes de brouillage et régler une position initiale dudit pointeur de code de brouillage pour pointer vers un code de brouillage ascendant inoccupé dans ladite file d'attente de codes de brouillage.

3. Procédé selon la revendication 2, dans lequel ladite étape consistant à ce que le RNC alloue un code de brouillage ascendant à l'UE comprend en outre les étapes consistant à :
déterminer si ledit pointeur de code de brouillage pointe vers la fin de ladite file d'attente de codes de brouillage, si la réponse est « oui », l'allocation d'un code de brouillage ascendant au dit UE a échoué, sinon le code de brouillage ascendant vers lequel pointe ledit pointeur de code de brouillage est alloué au dit UE, et le drapeau d'occupation correspondant est modifié ;
déterminer s'il existe des codes de brouillage ascendants inoccupés dans ladite file d'attente de codes de brouillage, si tel n'est pas le cas, ledit pointeur de code de brouillage est réglé pour pointer vers la fin de ladite file d'attente de codes de brouillage, sinon ledit pointeur de code de brouillage est réglé pour pointer vers le code de brouillage ascendant inoccupé le plus proche.

4. Procédé selon la revendication 2 ou 3, dans lequel ladite étape consistant à ce que le RNC libère le code de brouillage ascendant occupé par l'UE comprend en outre les étapes consistant à :
libérer le code de brouillage ascendant occupé par ledit UE et modifier le drapeau d'occupation correspondant ;
déterminer si ledit pointeur de code de brouillage pointe vers la fin de ladite file d'attente de codes de brouillage, si la réponse est « oui », ledit pointeur de code de brouillage est réglé pour pointer vers ledit code de brouillage ascendant libéré.

5. Procédé selon la revendication 4, dans lequel ladite étape consistant à ce que le RNC libère le code de brouillage ascendant occupé par l'UE comprend en outre l'étape suivante :
lorsque ledit UE est relocalisé vers un autre RNC, avant de libérer le code de brouillage ascendant occupé par l'UE, le RNC attend une période de temps prédéterminée puis libère le code de brouillage ascendant occupé par ledit UE.

6. Procédé selon la revendication 1, dans lequel ladite capacité planifiée du RNC signifie le nombre maximum d'utilisateurs pouvant être activés à l'intérieur du RNC en même temps.

7. Procédé selon la revendication 1, dans lequel le nombre desdits codes de brouillage ascendants alloués au RNC est supérieur à une fois la capacité planifiée du RNC.
